# EUROPEAN PATENT APPLICATION

(11) **EP 4 039 559 A1**
(43) Date of publication of application: **10.08.2022**
(21) Application number: 20871228.1
(22) Date of filing: 04.09.2020
(51) Int. Cl.: B61L 25/04, G07C 5/00, B61L 23/00, G01D 9/00

(54) **DATA RECORDING DEVICE AND DATA RECORDING METHOD**

(30) Priority: 04.10.2019 JP 2019183637
(71) Applicant: Hitachi, Ltd., Tokyo 100-8280 (JP)
(72) Inventor: ODA, Atsushi, Tokyo 100-8280 (JP); IMAMOTO, Kenji, Tokyo 100-8280 (JP); KUDO, Takumi, Tokyo 100-8280 (JP)
(74) Representative: Mewburn Ellis LLP
(86) International application number: PCT/JP2020/033559
(87) International publication number: WO 2021/065341

(57) **Abstract**

External sensor data is efficiently recorded without changing a resolution or a sampling rate. In a data recording device, an acquired data property storing unit stores, as a data property, an external environment in which external sensor data is to be recorded, an external sensor data property recognizing unit recognizes, as a data property, the external environment corresponding to the external sensor data, a data recording necessity determining unit determines, based on the data property recognized by the external sensor data property recognizing unit and the data property stored in the acquired data property storing unit, whether the external sensor data is required to be recorded, and a data recording unit records the external sensor data when it is determined by the data recording necessity determining unit that the external sensor data is required to be recorded.

## Description

### Technical Field

The present invention relates to a data recording device and a data recording method.

### Background Art

In recent years, research on automatic driving in an existing track transportation system is performed for reasons such as a concern about lack of personnel associated with aging of drivers and a reduction in operation cost. In a track transportation system in which a transporting train travels on a track, it is not possible to avoid the obstruction by steering when there is an obstruction on the track, and therefore, detecting the obstruction on the track is important for improving safety and operability of the track transportation system.

As a mechanism for automatically detecting an obstruction on a route, a method using an external sensor such as a millimeter wave radar, a laser radar, or a camera has been studied, and the external sensor has a character that actual performance can vary with respect to performance in terms of specifications depending on a surrounding environment (weather, brightness, and surrounding structures). Therefore, it is important to accumulate external sensor data under various conditions and learn and verify an obstruction detection logic. However, since data of the external sensor (in particular, the camera) has a large amount, it is difficult to record all data, and a technique of efficiently recording the external sensor data is required.

PTL 1 discloses a technique of reducing a data recording amount by changing a format (a resolution or a sampling rate) of recorded data based on past recorded data when a recording trigger condition is satisfied.

### Citation list

### Patent Literature

PTL 1: JP-A-2013-182510

### Summary of Invention

### Technical Problem

The external sensor data used for learning and verifying the obstruction detection logic is preferably the same as external sensor data used by the obstruction detection logic installed in the track transportation system, and it is not preferable to record the external sensor data by changing the resolution or the sampling rate. In the technique disclosed in PTL 1, the data recording amount is reduced by changing the resolution or the sampling rate. Therefore, the technique disclosed in PTL 1 has a problem that the recorded data cannot be used for learning and verifying the obstruction detection logic.

The invention has been made in view of the above problem, and an object of the invention is to efficiently record external sensor data without changing a resolution or a sampling rate.

### Solution to Problem

In order to solve the above problem, in one of typical data recording devices according to the invention, an acquired data property storing unit is configured to store, as a data property, an external environment in which data output by an external sensor (hereafter, referred to as "external sensor data") is to be recorded, an external sensor data property recognizing unit is configured to recognize, as a data property, the external environment corresponding to the external sensor data, a data recording necessity determining unit is configured to determine, based on the data property recognized by the external sensor data property recognizing unit and the data property stored in the acquired data property storing unit, whether the external sensor data is required to be recorded, and a data recording unit is configured to record the external sensor data when it is determined by the data recording necessity determining unit that the external sensor data is required to be recorded.

### Advantageous Effect

According to the invention, the external sensor data can be efficiently recorded without changing a resolution or a sampling rate, and the external sensor data under various conditions used for learning and verifying an obstruction detection logic can be accumulated while a recorded data amount is limited.

Problems, configurations, and effects other than those described above will be clarified with the following descriptions of embodiments.

### Brief Description of Drawings

[FIG. 1] FIG. 1 is a diagram showing an overall configuration of a track transportation system on which a data recording device according to an embodiment of the invention is mounted.
[FIG. 2] FIG. 2 is a diagram showing a function block of the data recording device according to the embodiment of the invention.
[FIG. 3] FIG. 3 is a flowchart showing a process of the data recording device according to the embodiment of the invention.
[FIG. 4] FIG. 4 is a diagram showing a data property list of the data recording device according to the embodiment of the invention.

### Description of Embodiments

Hereinafter, one embodiment according to the invention will be described with reference to the drawings.

In the present disclosure, the term "external environment" means an external environment around a train from which detection is performed or data is acquired by an external sensor or by a train on which the external sensor is mounted. Therefore, the external environment is represented by using, for example, a time point, a meteorological phenomenon, a train position, an object position, and a detection object.

In addition, the term "data property" is an index for classifying data acquired by the external sensor, and is represented by using, for example, a time point, a meteorological phenomenon, a train position, an object position, and a detection object, similar to those in the case of the external environment.

### [Embodiment]

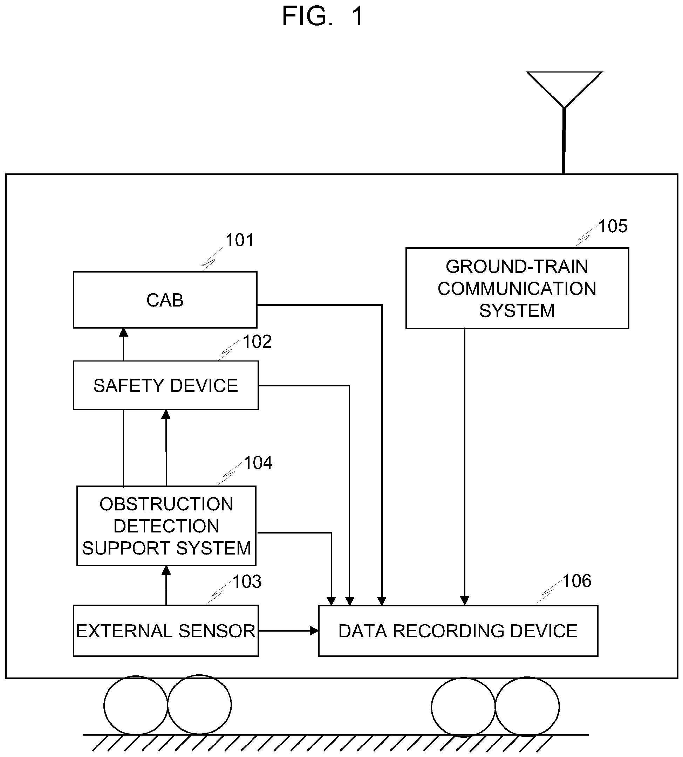

FIG. 1 is a diagram showing an overall configuration of a track transportation system on which a data recording device according to an embodiment of the invention is mounted. The track transportation system includes a cab 101, a safety device 102 that prevents collision between trains and secures safety of the track transportation system, an external sensor 103 such as a millimeter wave radar, a laser radar, or a camera that senses surroundings, an obstruction detection support system 104 that detects an obstruction on a track based on information from the external sensor 103, notifies a driver of a detection result of the obstruction via the cab 101, and transmits a stop signal to the safety device 102 when it is determined that a possibility of collision with the obstruction is high, a ground-train communication system 105 that transmits and receives various information to and from ground, and a data recording device 106.

The safety device 102 grasps a position of a train and transmits train position information to the data recording device 106. The train position is generally calculated based on an integral of a train speed. The obstruction detection support system 104 detects an obstruction based on information from the external sensor 103. The obstruction detection support system 104 further recognizes an attribute (a person, an automobile, or the like) of the obstruction, and transmits, as detection object information, the attribute to the data recording device 106. In addition, the obstruction detection support system 104 notifies the driver of the detection result of the obstruction via the cab 101 and transmits the stop signal to the safety device 102 when it is determined that the possibility of collision with the obstruction is high. The obstruction detection support system 104 further transmits, to the data recording device 106, the notification content to the driver and the stop signal to the safety device 102. A detection logic of the obstruction detection support system 104 is not limited as long as the obstruction detection support system 104 can generate the detection object information based on the data of the external sensor 103.

The driver operates acceleration and deceleration of the train such that the train can travel with a predetermined schedule. The operation of the driver is transmitted to the data recording device 106 via the cab 101. The ground-train communication system 105 receives, from the ground, information that is difficult to generate in the train among information required by the data recording device 106, and transmits the information to the data recording device 106. Examples of the information received from the ground include a time point, weather, a maintenance plan, and route conditions (a position of a station, a position of a level crossing, a position of a tunnel, and the like). Since the route conditions are not information that is frequently changed, a route condition storing unit (not shown) may be provided in the train. In short, a method for acquiring the required information is not limited as long as the data recording device 106 provides the required information.

In addition, the method of directly transmitting and receiving data between the data recording device 106 and each of the cab 101, the safety device 102, the external sensor 103, the obstruction detection support system 104, and the ground-train communication system 105 has been described. Alternatively, the transmission and reception may be performed via, for example, a train information control device (not shown), which is a system that manages information in the train, as long as the data recording device 106 can receive data from each unit.

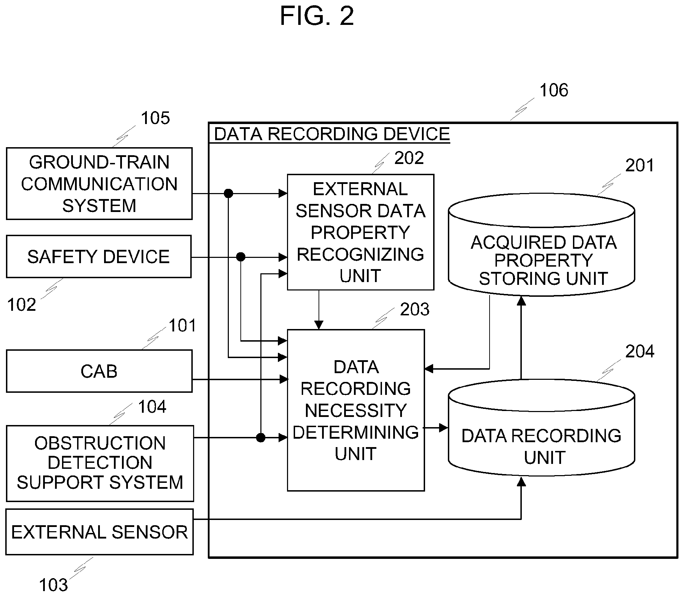

FIG. 2 is a diagram showing a function block of the data recording device according to the embodiment of the invention. The data recording device 106 includes an acquired data property storing unit 201 that stores, as a data property, an external environment in which external sensor data is to be recorded, an external sensor data property recognizing unit 202 that recognizes, as a data property, the external environment corresponding to the external sensor data from various kinds of information, a data recording necessity determining unit 203 that determines whether the external sensor data is required to be recorded, and a data recording unit 204 that records the external sensor data.

The external sensor data property recognizing unit 202 acquires the train position information from the safety device 102, the detection object information from the obstruction detection support system 104, and the time point, the weather, the maintenance plan, and the route conditions from the ground-train communication system 105. The data recording necessity determining unit 203 acquires the driving operation from the cab 101, the notification content to the driver and the stop signal to the safety device 102 from the obstruction detection support system 104, and the maintenance plan from the ground-train communication system 105.

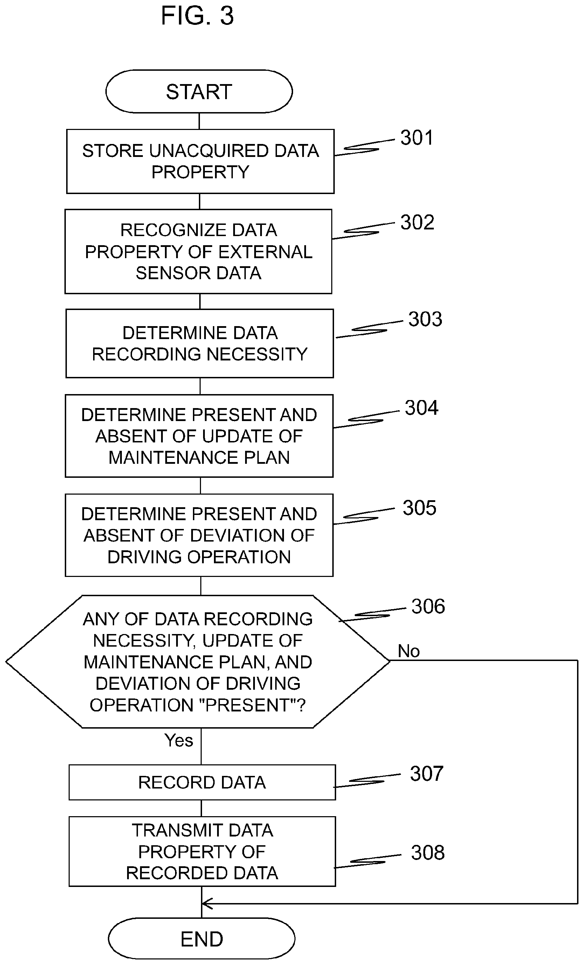

Next, a data recording method of the data recording device will be described. FIG. 3 is a flowchart showing a process of the data recording device according to the embodiment of the invention. Step 301 is a process in the acquired data property storing unit 201, step 302 is a process in the external sensor data property recognizing unit 202, steps 303 to 305 are processes in the data recording necessity determining unit 203, and steps 306 to 308 are processes in the data recording unit 204.

### Step 301:

The acquired data property storing unit acquires a data property of the recorded external sensor data from the data recording unit, and updates a data property list managed by the acquired data property storing unit. The data property of the recorded external sensor data may be acquired each time the external sensor data is newly recorded, or may be acquired periodically.

The data property is defined by a combination of conditions of, for example, a time point, a meteorological phenomenon, a train position, an object position, and a detection object. Regarding the time point, the data property may be managed by a time, or may be defined by time zones such as morning, daytime, evening, and night. Regarding the meteorological phenomenon, the data property is defined by conditions such as weather (clear weather, rain, snow, snow storm, strong wind, and the like) and illuminance. The train position indicates a position of an own train, and the data property is defined by a condition whether the own train is at a station, at a tunnel, or in a curved section. The object position indicates a position of an obstruction detected by the obstruction detection support system, and the data property is defined by a condition whether the obstruction is at a level crossing, on a platform, at a tunnel, or in a curved section. The detection object indicates an attribute of the obstruction detected by the obstruction detection support system, and the data property is defined by conditions such as a person, an automobile, and earth and sand.

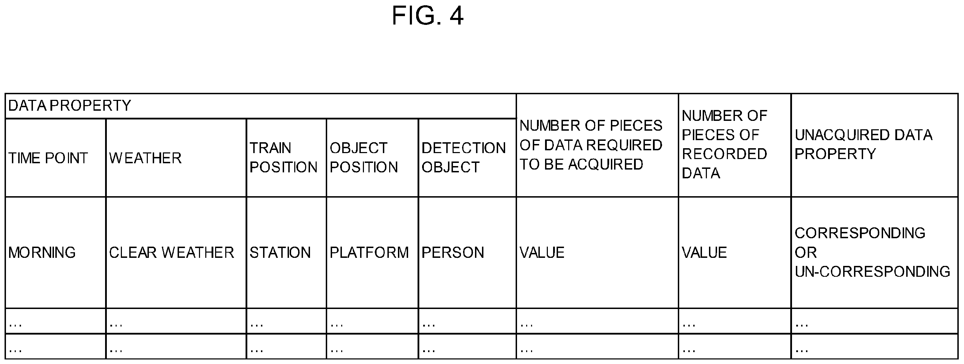

FIG. 4 is a diagram showing the data property list of the data recording device according to the embodiment of the invention. The data property list is a list of a combination of conditions of the time point, the meteorological phenomenon, the train position, the object position, and the detection object. When the time point includes 10 conditions, the meteorological phenomenon includes 5 conditions, the train position includes 4 conditions, the object position includes 5 conditions, and the detection object includes 9 conditions, 9000 data properties are defined. The number of pieces of data to be acquired for each data property is defined as the number of pieces of data required to be acquired, and when external sensor data corresponding to the data property is recorded, the number of the external sensor data is stored as the number of pieces of recorded data. A data property in which the number of pieces of recorded data is less than the number of pieces of data required to be acquired is defined as an unacquired data property.

The acquired data property storing unit transmits, as the unacquired data property, the data property defined as the unacquired data property to the data recording necessity determining unit. The process proceeds to step 302.

### Step 302:

The external sensor data property recognizing unit recognizes, as a data property, the external environment corresponding to the external sensor data based on each condition defining the data property in the acquired data property storing unit. Specifically, the external environment corresponding to the external sensor data is classified into, for example, a time point, a meteorological phenomenon, a train position, an object position, and a detection object based on information from the obstruction detection support system, the ground-train communication system, and the safety device, and is transmitted as a data property to the data recording necessity determining unit. The process proceeds to step 303.

### Step 303:

The data recording necessity determining unit receives the data property relating to the external environment corresponding to the external sensor data from the external sensor data property recognizing unit, and the unacquired data property from the acquired data property storing unit. When the data property relating to the external environment corresponding to the external sensor data is included in the unacquired data property, information indicating that the data is required to be recorded is transmitted as data recording necessity information to the data recording unit. The information indicating that the data is required to be recorded is continuously transmitted until the data property recognized by the external sensor data property recognizing unit changes. When the data property relating to the external environment corresponding to the external sensor data is not included in the unacquired data property, information indicating that the data is not required to be recorded is transmitted as the data recording necessity information to the data recording unit. The process proceeds to step 304.

### Step 304:

The data recording necessity determining unit determines, based on information of the maintenance plan from the ground-train communication system, whether the maintenance plan is updated. In a maintenance work, when information (such as an image) of a route to be maintained is present in advance, the information is useful for making the maintenance plan. Since the information of the route to be maintained is desirable to be the latest information, the external sensor data is recorded even when the data property relating to the external environment corresponding to the external sensor data is not the unacquired data property. When the maintenance plan is updated, whether a section of the updated maintenance plan is near the train position is determined based on the train position information from the safety device, and when the train position is within or near the section where the maintenance plan is updated, information indicating that the maintenance plan is present is transmitted as maintenance plan update information to the data recording unit. The process proceeds to step 305.

Accordingly, external sensor data of a section in which maintenance is planned can be intensively recorded, and the latest information of the route to be maintained can be utilized for the maintenance plan.

### Step 305:

The data recording necessity determining unit determines, based on information from the obstruction detection support system or a cab, whether a difference occurs between an output (for example, a warning notification or a stop signal to a driver) of the obstruction detection support system and a driving operation of the driver. In a case where the obstruction detection support system outputs the warning notification or the stop signal to the driver, but the driver performs an operation that does not match the warning notification or an operation to cancel the stop signal (for example, pressing an acceleration button or a cancel button), there is a high possibility that the obstruction detection logic of the obstruction detection support system performs an erroneous detection. In addition, in a case where the obstruction detection support system does not output the warning notification or the stop signal to the driver, but the driver applies a brake, there is a high possibility that the obstruction detection logic of the obstruction detection support system does not detect an obstruction. The external sensor data under such conditions is useful for improving the obstruction detection logic. Therefore, in such a case, the data is recorded even when the data property relating to the external environment corresponding to the external sensor data is not the unacquired data property. When a difference occurs between the output of the obstruction detection support system and the driving operation of the driver, information indicating that there is a driving operation deviation is transmitted to the data recording unit as driving operation deviation information. The process proceeds to step 306.

Accordingly, the external sensor data when the difference occurs between the output of the obstruction detection support system and the driving operation of the driver can be recorded, and the external sensor data in such a case can be utilized to improve the obstruction detection logic.

### Step 306:

The data recording unit acquires the data recording necessity information, the maintenance plan update information, and the driving operation deviation information. The data recording unit confirms whether any of the data recording necessity information, the maintenance plan update information, and the driving operation deviation information is "present". In a case of "present", the process proceeds to step 307, and in a case of "absent", the current process is ended.

### Step 307:

The data recording unit records the external sensor data. The data recording unit records the external sensor data from a time point after a predetermined time (for example, 30 seconds) from a time point when the data is determined to be required to be recorded in step 306, and records the external sensor data when it is determined in step 306 that the data is required to be recorded. The process proceeds to step 308.

### Step 308:

The data recording unit transmits a data property of a newly recorded external sensor data to the acquired data property storing unit.

A configuration in which the data recording necessity determining unit determines that the external sensor data is required to be recorded when the maintenance plan is updated in the process in FIG. 3 has been described. Alternatively, information in an acquired data property storing unit may be updated, whereby the external sensor data may be recorded when the train position is within or near the section in which the maintenance plan is updated. In this case, step 304 in FIG. 3 is omitted, and step 301 is changed as follows.

### Step 301':

The acquired data property storing unit acquires a data property of the recorded external sensor data from the data recording unit, and updates a data property list managed by the acquired data property storing unit. The data property is defined by a combination of conditions of, for example, a time point, a meteorological phenomenon, a train position, an object position, and a detection object. The train position indicates a position of an own train, and the data property is defined by a condition at which station, which tunnel, or which curved section the own train is. The number of pieces of data to be acquired for each data property is defined as the number of pieces of data required to be acquired, and when external sensor data corresponding to the data property is recorded, the number of the external sensor data is stored as the number of pieces of recorded data. A data property in which the number of pieces of recorded data is less than the number of pieces of data required to be acquired is defined as an unacquired data property.

In addition, whether the maintenance plan is updated is determined based on the information (not shown) from the ground-train communication system. In a case where the maintenance plan is updated, whether the train position described in the data property list is within the section of the maintenance plan is determined, and the data property in which the train position is within the section of the maintenance plan is defined as the unacquired data property regardless of the number of pieces of recorded data. The acquired data property storing unit transmits, as the unacquired data property, the data property defined as the unacquired data property to the data recording necessity determining unit.

Accordingly, the external sensor data of the section in which the maintenance is planned can be intensively recorded, and the latest information of the route to be maintained can be utilized for the maintenance plan.

An example in which the driver performs a driving operation has been described in the present embodiment, and the invention is also applicable to an unmanned driving system in which the driving operation of the train is also performed by the system. In the case, step 305 in FIG. 3 may be deleted.

In the present embodiment, since the external sensor data is unconditionally recorded when the maintenance plan update information and the driving operation deviation information are "present", which is considered to bring a burden on a capacity of the data recording unit. Therefore, when the maintenance plan update information and the driving operation deviation information are "present", past external sensor data having the same data property as that of a data property relating to external environment corresponding to a new external sensor data is discarded from the data recording unit, and the new external sensor data is recorded. Accordingly, the latest external sensor data can be utilized for maintenance and improvement of the obstruction detection logic without giving a burden on the capacity of the data recording unit.

A method of not recording the external sensor data when the number of pieces of recorded data reaches the number of pieces of data required to be acquired has been described in the present embodiment. Alternatively, when the data property relating to the external environment corresponding to the new external sensor data is the same as the data property that reaches the number of pieces of data required to be acquired, external sensor data that has the same data property as the data property relating to the external environment corresponding to the new external sensor data and has the oldest recording date and time may be discarded from the data recording unit, and the new external sensor data may be recorded. Accordingly, the latest external sensor data can be always recorded without giving a burden on the capacity of the data recording unit.

As described above, according to the embodiment of the invention, the external sensor data can be efficiently recorded without changing a resolution or a sampling rate, and the external sensor data under various conditions used for learning and verifying the obstruction detection logic can be accumulated while limiting the recorded data amount. In addition, the external sensor data of the section in which the maintenance is planned can be intensively recorded, and the latest information of the route to be maintained can be utilized for the maintenance plan. Further, the external sensor data when the difference occurs between the output of the obstruction detection support system and the driving operation of the driver can be recorded, and the external sensor data in such a case can be utilized to improve the obstruction detection logic.

The invention is not limited to the above-mentioned embodiment, and includes various modifications. For example, the above-mentioned embodiment has been described in detail for easy understanding of the invention, and is not necessarily limited to those having all the described configurations. In addition, a part of the configuration of the embodiment may be added, deleted, or replaced with another configuration.

### Reference Sign List

106 data recording device
201 acquired data property storing unit
202 external sensor data property recognizing unit
203 data recording necessity determining unit
204 data recording unit

## Claims

1. A data recording device comprising:
an acquired data property storing unit;
an external sensor data property recognizing unit;
a data recording necessity determining unit; and
a data recording unit, wherein
the data recording device is configured to receive data output from an external sensor (hereinafter, referred to as "external sensor data"),
the acquired data property storing unit is configured to store, as a data property, an external environment in which the external sensor data is to be recorded,
the external sensor data property recognizing unit is configured to recognize, as a data property, the external environment corresponding to the external sensor data,
the data recording necessity determining unit is configured to determine, based on the data property recognized by the external sensor data property recognizing unit and the data property stored in the acquired data property storing unit, whether the external sensor data is required to be recorded, and
the data recording unit records the external sensor data when it is determined by the data recording necessity determining unit that the external sensor data is required to be recorded.

2. The data recording device according to claim 1, wherein
the acquired data property storing unit is configured to update, based on the data property of the external sensor data recorded in the data recording unit, a data property to be recorded.

3. The data recording device according to claim 1, wherein
the data recording necessity determining unit is configured to compare a position of a train where the data recording device is mounted with a section of a maintenance plan, and determines that the external sensor data is required to be recorded even when the position of the train is within the section of the maintenance plan.

4. The data recording device according to claim 1, wherein
the acquired data property storing unit is configured to compare a train position in a data property with a section of a maintenance plan, and updates the corresponding data property as a data property to be recorded when the train position in the data property is within the section of the maintenance plan.

5. The data recording device according to claim 1, wherein
the data recording device is configured to receive an output of an obstruction detection support system and a driving operation of a driver output from a cab, and
the data recording necessity determining unit is configured to compare the output of the obstruction detection support system with the driving operation, and determines that the external sensor data is required to be recorded when a difference occurs between the output of the obstruction detection support system and the driving operation.

6. A data recording method comprising:
an acquired data property storing step of storing, as a data property, an external environment in which external sensor data is to be recorded;
an external sensor data property recognizing step of recognizing, as a data property, the external environment corresponding to the external sensor data;
a data recording necessity determining step of determining, based on the data property recognized in the external sensor data property recognizing step and the data property stored in the acquired data property storing step, whether the external sensor data is required to be recorded; and
a data recording step of recording the external sensor data when it is determined in the data recording necessity determining step that the external sensor data is required to be recorded.

7. The data recording method according to claim 6, wherein
in the acquired data property storing step, a data property to be recorded is updated based on the data property of the external sensor data recorded in the data recording step.

8. The data recording method according to claim 6, wherein
in the data recording necessity determining step, a train position is compared with a section of a maintenance plan, and it is determined that the external sensor data is required to be recorded even when the train position is within the section of the maintenance plan.

9. The data recording method according to claim 6, wherein
in the acquired data property storing step, a train position in a data property is compared with a section of a maintenance plan, and the corresponding data property is updated as a data property to be recorded when the train position of the data property is within the section of the maintenance plan.

10. The data recording method according to claim 6, wherein
in the data recording necessity determining step, an output of an obstruction detection support system is compared with a driving operation of a driver from a cab, and it is determined that the external sensor data is required to be recorded when a difference occurs between the output of the obstruction detection support system and the driving operation.
